# EUROPEAN PATENT APPLICATION

(11) **EP 4 015 905 A1**
(43) Date of publication of application: **22.06.2022**
(21) Application number: 20853758.9
(22) Date of filing: 22.07.2020
(51) Int. Cl.: F23G 5/46, H02J 7/14, H02J 7/35, F01K 23/10, F01K 11/02, F01D 15/10, F01D 1/02

(54) **SELF-OPERATED INCINERATOR SYSTEM**

(30) Priority: 16.08.2019 KR 20190100564
(71) Applicant: Kim, Kyoung Hwan, Gyeonggi-do 17842 (KR); Cheon, Byung Chul, Jeollanam-do 58324 (KR)
(72) Inventor: Kim, Kyoung Hwan, Gyeonggi-do 17842 (KR); Cheon, Byung Chul, Jeollanam-do 58324 (KR)
(74) Representative: Arth, Hans-Lothar
(86) International application number: PCT/KR2020/009656
(87) International publication number: WO 2021/033930

(57) **Abstract**

A self-operated incinerator system is disclosed. The self-operated incinerator system comprises: an incinerator; a steam boiler configured to receive waste heat from the incinerator so as to produce steam; a turbine device configured to generate a turbine rotational force by receiving the steam produced by the steam boiler; a generator configured to generate power by using the turbine rotational force generated by the turbine device; and a storage battery configured to store the power generated by the generator and to use the power for starting or normally operating at least one from among the incinerator and the steam boiler.

## Description

### TECHNICAL FIELD

Disclosed is a self-operated incinerator system. More particularly, Disclosed is a self-operated incinerator system for which no external power supply is required.

### BACKGROUND ART

Currently used small and medium-sized incinerators are generally preferred to be installed far from downtown areas, and firewood incinerators and the like may be mainly used in places where electricity is not available. However, since an external power is required to be supplied to operate the incinerators, it is difficult to install the incinerators where the incinerators are actually needed.

Patent Document 1 discloses a waste incineration power generation system that produces steam using waste heat generated during combustion in an incinerator, turns a steam turbine by using the produced steam to generate electricity in a generator, and supplies the above generated power to a load or a sodium-sulfur battery. However, Patent Document 1 discloses that the generated power is supplied to the load rather than the incinerator. Further, the conventional incineration power generation system including the waste incineration power generation system of Patent Document 1 is required to continuously operate with a small amount of fuel even when the operation is unnecessary. In other words, once the operation is stopped, it takes a lot of effort and energy to restart the operation, so there is no choice but to operate continuously for convenience of driving despite loss.

(Patent Document 1)
Japanese Patent Publication No. 2001-006728

### DISCLOSURE

### TECHNICAL PROBLEM

One embodiment of the present invention provides a self-operated incinerator system for which no external power supply is required.

### TECHNICAL SOLUTION

According to one aspect of the present invention provides a self-operated incinerator system including:
an incinerator;
a steam boiler configured to receive waste heat from the incinerator so as to produce steam;
a turbine device configured to receive the steam produced from the steam boiler to generate a turbine rotational force;
a generator configured to generate power by using the turbine rotational force generated by the turbine device; and
a storage battery configured to store the power generated by the generator and use the power for starting or normally operating at least one from the incinerator and the steam boiler.

The self-operated incinerator system may be configured to start or normally operate without an external power supply.

Each of the incinerator and the steam boiler may be configured to start only with a power supplied from the storage battery without an external power supply, and normally operate only with a power supplied from the generator and the storage battery without the external power supply.

The storage battery may be configured to be charged only with the power supplied from the generator without the external power supply except for an initial charging before installation.

The self-operated incinerator system may further include a solar battery configured to produce power and supply the power to the storage battery, wherein the storage battery may be configured to be charged only with a power supplied from at least one of the generator and the solar battery without an external power supply except for an initial charging before installation.

The self-operated incinerator system may be configured to stop operation when the operation is unnecessary and restart without the external power supply when the operation is necessary.

The self-operated incinerator system may further include: a rectifier electrically connected to the generator and the storage battery; a first inverter electrically connected to the storage battery; a second inverter electrically connected to the rectifier; a static switch selectively electrically connected to the first inverter or the second inverter; and a distribution board electrically connected to the static switch.

The self-operated incinerator system may further include a control unit configured to control an operation of the static switch by sensing a frequency or power of the generator.

The turbine device may include an impulse turbine.

The impulse turbine may include a cylindrical body having an axial hole, and a blade unit disposed to surround a periphery of the body, wherein the blade unit may include a cylindrical base disposed to surround the periphery of the body, and a plurality of unit blades radially arranged in a line along a periphery of the base, and each of the unit blades may include an outlet that discharges an injected fluid in a direction different from a fluid injection direction but does not discharge the fluid to other unit blades.

Each of the unit blades may be configured to suppress the injected fluid from being discharged to the other unit blades.

Each of the unit blades may be configured to discharge 90% by weight or more of the injected fluid to the outlet.

Each of the unit blades may include a groove portion for temporarily accommodating the injected fluid, a bottom portion forming a bottom of the groove portion, a first blocking portion forming a right wall of the groove portion, a second blocking portion forming a left wall of the groove portion, and a third blocking portion forming a front wall and an upper wall of the groove portion, wherein the bottom portion may have a part closed by the upper wall of the groove portion and a remaining part that is opened, the first blocking portion may have a length shorter than the second blocking portion, and the outlet may be positioned adjacent to the first blocking portion.

The groove portion may have an arch-shaped flat section.

The body may include a cylindrical inner body having an axial hole, and a cylindrical outer body disposed to surround a periphery of the inner body.

The impulse turbine may be configured to obtain a rotation speed of 3,600 rpm by a fluid injection pressure of 5 kPa or less.

Still another aspect of the present invention
provides a rotating shaft support structure in a turbine device including a housing formed therein with a space for allowing a turbine to be rotated and having a pair of fluid inlet and fluid outlet formed on one side and an opposite side, respectively, and a turbine rotated with a rotating shaft axially installed in a center, wherein the housing is configured to have opened both sides, in which one side is coupled to a shaft support for supporting one end of the rotating shaft and the other side is coupled to a fluid discharge pipe having a fluid discharge hole, the shaft support is formed in a center thereof with a through-hole through which the rotating shaft passes and provided with a flange portion coupled to the one side of housing, in which the through-hole is formed in a front thereof with a bearing installation groove and formed in a rear thereof with a bearing accommodation space, a front bearing for supporting a front of the rotating shaft is fitted and coupled to the bearing installation groove, and a rear bearing for supporting a rear of the rotating shaft is fitted and coupled to the bearing accommodation space, thereby eccentrically supporting the rotating shaft.

A blocking member may be formed in the bearing accommodation space to block the fluid introduced into the bearing.

### ADVANTAGEOUS EFFECTS

The self-operated incinerator system according to one embodiment of the present invention can repeat starting, normally operating, stopping the operation, restarting, re-operating and stopping the re-operating without an external power supply. Accordingly, the self-operated incinerator system can be used in remote places such as wild areas or islands where electricity is not available.

### DESCRIPTION OF DRAWINGS

FIG. 1 is a view schematically showing a self-operated incinerator system according to one embodiment of the present invention.
FIG. 2 is a perspective view of one side of an impulse turbine provided in a turbine device in the self-operated incinerator system of FIG. 1.
FIG. 3 is a sectional view taken along line A-A' of the impulse turbine.
FIG. 4 is a side view of the impulse turbine of FIG. 2 when viewed in the direction B.
FIG. 5 is a side view of the impulse turbine of FIG. 2 when viewed in the direction B'.
FIG. 6 is a front view of the impulse turbine of FIG. 2 when viewed in the direction C.
FIG. 7 is a perspective view of the other side of the impulse turbine provided in the turbine device in the self-operated incinerator system of FIG. 1.
FIG. 8 is an exploded perspective view showing a rotating shaft support structure of the turbine device in the self-operated incinerator system of FIG. 1.
FIG. 9 is a partially exploded perspective view of the turbine device in the self-operated incinerator system of FIG. 1.
FIG. 10 is a sectional view of the turbine device.
FIG. 11 is a view showing an operating state of the turbine device of FIG. 9.
FIG. 12 is a perspective projection view showing introduced and discharged pathways of the fluid during operating the turbine device of FIG. 9.

### BEST MODE

### Mode for Invention

Hereinafter, a self-operated incinerator system according to one embodiment of the present invention will be described in detail below with reference to the drawings.

In the specification herein, the expression "self-operated (self-powered)" refers to a type that operates without an external power supply.

In addition, in the specification herein, the expression "without external power supply" signifies that no power is supplied from the outside of the self-operated incinerator system.

In addition, in the specification herein, the expression "starting" refers to enabling a first operation after an interruption state of operation, and the expression "normal operation" refers to a state in which the operation is normally performed after the starting. In addition, in the specification herein, the term "impulse turbine" refers to a turbine in which a pressure of a fluid is decreased and a velocity of the fluid is increased upon supplying a high-pressure fluid to a nozzle, the fluid having the above increased velocity passes through the nozzle in the form of a high-speed jet and hits a turbine blade (that is, a unit blade) to change a flow direction, and accordingly, an impact force is generated due to the change in flow direction, thereby rotating the blade due to the impact force (see http://www.mechanicalengineeringsite.com/impulse-turbine-reaction-turbine-principle-working-difference/).

In addition, in the specification herein, the term "unit blade" refers to an individual blade constituting a blade unit.

In addition, in the specification herein, a "fluid" may include steam, air, oil, water, various gases, or combinations thereof.

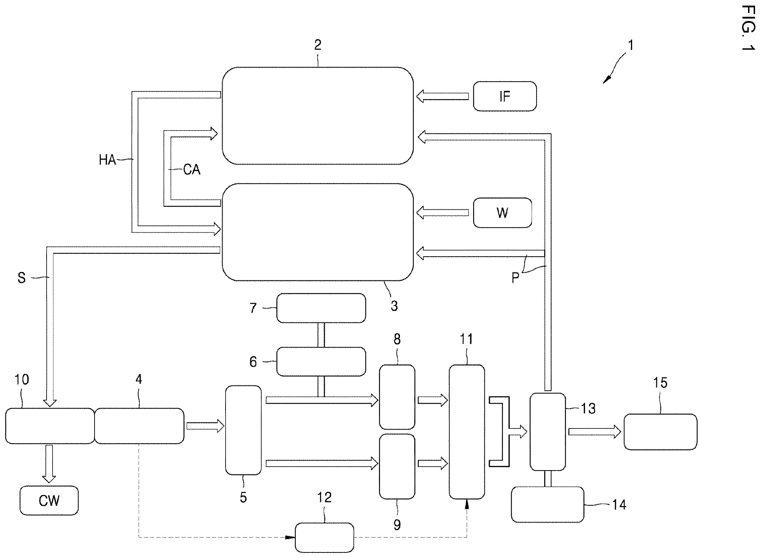

FIG. 1 is a view schematically showing a self-operated incinerator system 1 according to one embodiment of the present invention.

The self-operated incinerator system 1 may be configured to start or normally operate without an external power supply. The conventional incinerator system (not shown) requires the external power supply during starting or during staring and normally operating.

In addition, the self-operated incinerator system 1 may be configured to stop the operation when the operation is unnecessary, and restart without the external power supply when the operation is necessary The conventional incinerator system (not shown) causes unnecessary energy consumption by continuously operating with a small amount of fuel to prevent a large amount of energy consumption due to the external power supply required for the restarting, even when the operation is unnecessary.

Referring to FIG. 1, the self-operated incinerator system 1 according to one embodiment of the present invention may include an incinerator 2, a steam boiler 3, a turbine device 10, a generator 4, a rectifier 5, a storage battery 6, a solar battery 7, a first inverter 8, a second inverter 9, a static switch 11, a control unit 12, a distribution board 13, a monitor 14, and/or a surplus using site 15.

The incinerator 2 refers to a furnace that burns incineration fuel IF.

The incineration fuel IF may be waste woods, palm oil residues, ocean plastic wastes and the like generated in places away from urban areas.

In addition, the incinerator 2 may be configured to incinerate about 100 kg of incineration fuel IF per hour.

In addition, the incinerator 2 may be configured to produce waste heat of about 800°C when initially operated (that is, starting) and then generate waste heat of about 1,500°C when activated (that is, normally operated).

In addition, the incinerator 2 requires power to operate a fan and a burner provided therein, and requires electric power of about 15 kw/h (3 φ, 380 V) based on the developed incinerator product.

In addition, when the incineration fuel IF is burned in the incinerator 2, waste heat is generated, and the waste heat may be recovered in the form of hot air HA and supplied to a steam boiler 3 described later.

In addition, the incinerator 2 may be configured to start only with a power P supplied from the storage battery 6 without the external power supply. In addition, the incinerator 2 may be configured to normally operate only with the power P supplied from the generator 4 and/or the storage battery 6 without the external power supply.

The steam boiler 3 may be configured to receive the waste heat from the incinerator 2 to produce steam S. Specifically, the steam boiler 3 may be configured to receive water W from the outside, receive the waste heat in the form of hot air HA from the incinerator 2, and produce steam S and cold air CA by heat exchange. In addition, the steam S may be supplied to the turbine device 10, and the cold air CA may be supplied to the incinerator 2.

In addition, the steam boiler 3 may be configured to start only with a power P supplied from the storage battery 6 without the external power supply. In addition, the steam boiler 3 may be configured to normally operate only with the power P supplied from the generator 4 and/or the storage battery 6 without the external power supply.

In addition, the capacity of the steam boiler 3 may be about 2 tons.

The turbine device 10 may be configured to receive the steam S produced in the steam boiler 3 to generate a turbine rotational force (specifically, a rotational force of the turbine blade).

In addition, the steam S supplied to the turbine device 10 may be converted into condensed water CW after generating the turbine rotational force and discharged to the outside or recovered to the steam boiler 3.

In addition, the turbine device 10 may be one or two or more (such as 2 to 4).

The above turbine device 10 has a simple structure and a very high efficiency compared to the conventional turbine device (not shown), thereby enabling the self-operated incinerator system 1 to start and normally operate without the external power supply. The turbine device 10 will be described later.

The generator 4 may be configured to produce the electric power P by using the turbine rotational force generated in the turbine device 10. The generator 4 may be a single-phase alternate current generator or direct current alternator.

In addition, the generator 4 may be one or two or more (such as 2 to 4).

The rectifier 5 may be electrically connected to the generator 4 and the storage battery 6.

In addition, the rectifier 5 refers to a device for stably rectifying the power produced by the generator 4. Specifically, the rectifier 5 refers to a device for converting the alternating current or direct current power produced by the generator 4 into a direct current power that is chargeable in the storage battery 6.

The generator 4 basically produces rated power at 1,800 rpm or 3,600 rpm, however, the rpm does not rise at once due to the characteristics of the turbine device 10, so the rectifier 5 is required for constant power production.

The storage battery 6 may be configured to store the power produced by the generator 4 and then use the power for starting and/or normally operating the incinerator 2 and/or the steam boiler 3.

In addition, the storage battery 6 may be configured to be charged only with the power supplied from the generator 4 without the external power supply except for initial charging before installation (that is, before modularization into the self-operated incinerator system 1).

The solar battery 7 may be configured to produce power and supply the power to the storage battery 6. In this case, the storage battery 6 may be configured to be charged only with the power supplied from the generator 4 and/or the solar battery without the external power supply except for the initial charging before installation. Specifically, the solar battery 7 may be used to produce power and supply the power to the storage battery 6 for the first time, or supply an additional power upon deterioration of the storage amount when the storage battery 6 is not used for a long period of time.

The first inverter 8 may be electrically connected to the storage battery 6.

The second inverter 9 may be electrically connected to the rectifier 5.

Each of the first inverter 8 and the second inverter 9 serves to convert the direct current power into the alternating current power.

The static switch 11 may be selectively electrically connected to the first inverter 8 or the second inverter 9. For example, the static switch 11 may be electrically connected to the first inverter 8 and electrically disconnected from the second inverter 9. As another example, the static switch 11 may be electrically disconnected from the first inverter 8 and electrically connected to the second inverter 9. Accordingly, the static switch 11 may serve as a switch for selecting any one of the power charged in the storage battery 6 and the power generated by the generator 4.

The control unit 12 may be configured to control the operation of the static switch 11 by sensing the frequency or power of the generator 4. Specifically, the control unit 12 enables the static switch 11 to be electrically connected to the first inverter 8 such that the power charged in the storage battery 6 is used when the frequency or power of the generator 4 is less than a rated value, and enables the static switch 11 to be electrically connected to the second inverter 9 such that the power generated by the generator 4 is used when the frequency or power of the generator 4 is equal to or more than the rated value.

The distribution board 13 may be a physical header that distributes the power P charged in the storage battery 6 or generated by the generator 4 to the incinerator 2, the steam boiler 3, and the surplus using site 15.

For example, when two steam turbines 10 operate, a generation capacity is about 40 KVA, and 32 KVA, which is a level of about 80%, of the power is generated when a power factor is taken into consideration. Since the power required for various equipment is 15 to 20 kw/h, about 12 to 17 kw/h of surplus power is generated.

The monitor 14 serves to monitor the amount of power generated by the generator 4, the amount of power used in the self-operated incinerator system 1, and the amount of surplus generated power, so as to adjust operating conditions of the entire self-operated incinerator system 1 and/or measure and adjust the amount of the amount of surplus generated power.

The surplus using site 15 may be a lighting fixture, a heating/cooling device, or various equipment.

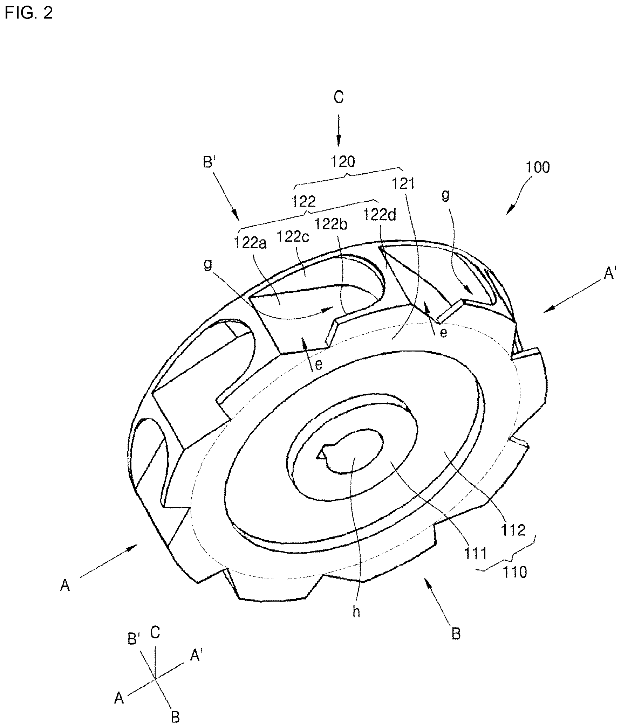

Hereinafter, the turbine device 10 will be described in detail below with reference to FIGS. 2 to 12.

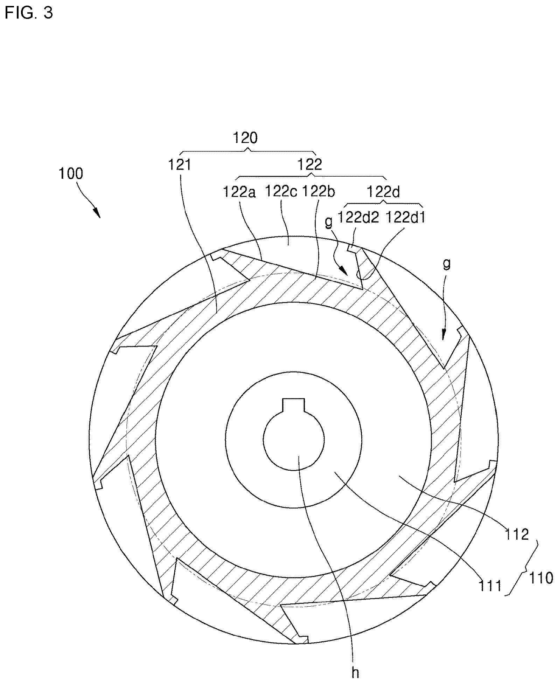

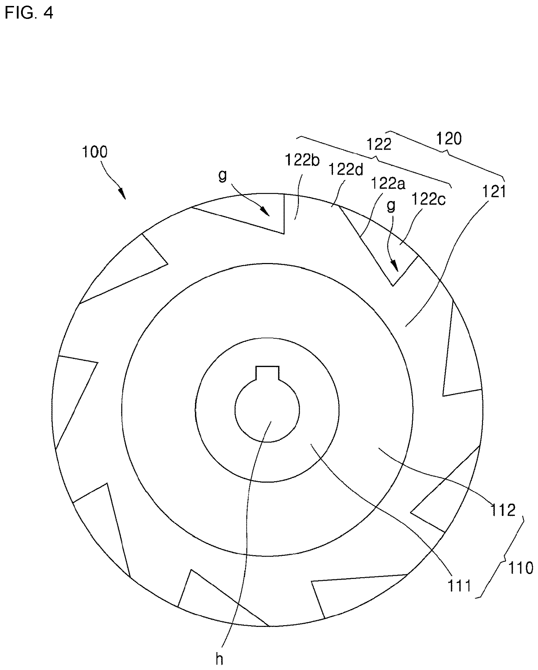

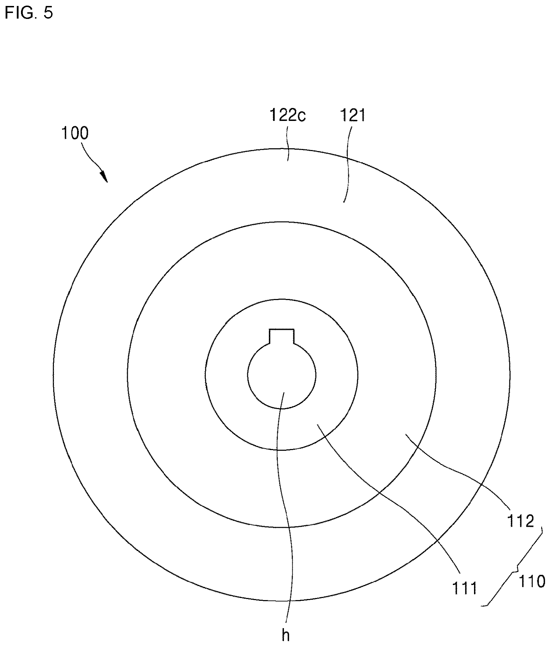

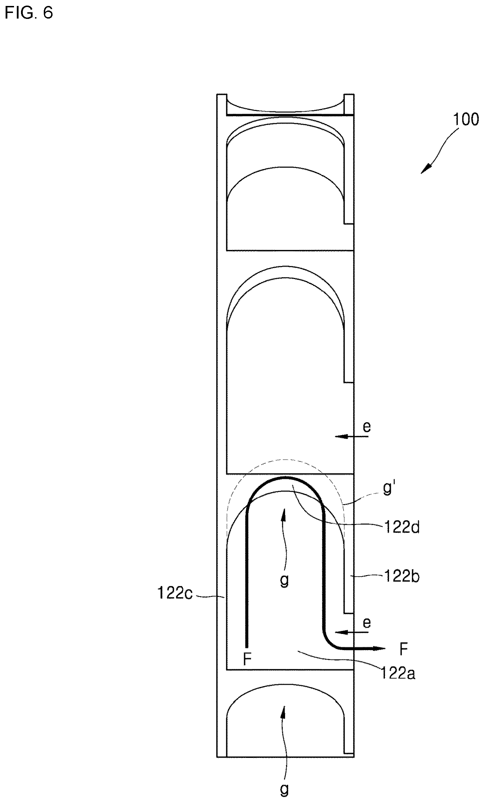

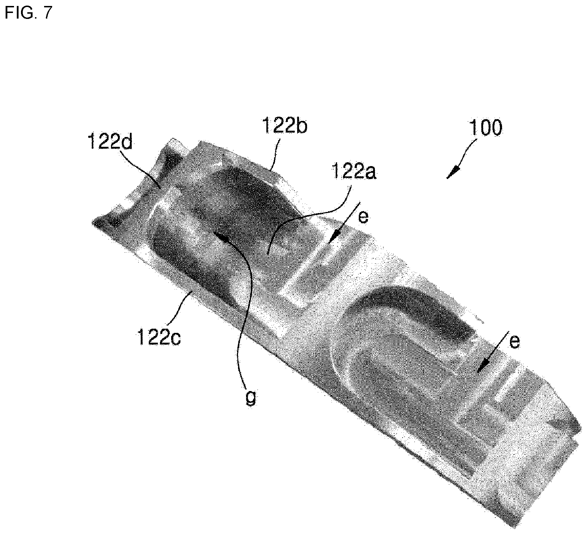

FIG. 2 is a perspective view of one side of the impulse turbine 100 provided in the turbine device 10 in the self-operated incinerator system 1 of FIG. 1. FIG. 3 is a sectional view taken along line A-A' of the impulse turbine 100 of FIG. 2. FIG. 4 is a side view of the impulse turbine 100 of FIG. 2 when viewed in the direction B. FIG. 5 is a side view of the impulse turbine of FIG. 2 when viewed in the direction B'. FIG. 6 is a front view of the impulse turbine 100 of FIG. 2 when viewed in the direction C. FIG. 7 is a perspective view of the other side of the impulse turbine 100 provided in the turbine device 10 in the self-operated incinerator system 1 of FIG. 1.

Referring to FIGS. 2 to 7, the impulse turbine 100 provided in the turbine device 10 in the self-operated incinerator system 1 of FIG. 1 includes a body 110 and a blade unit 120.

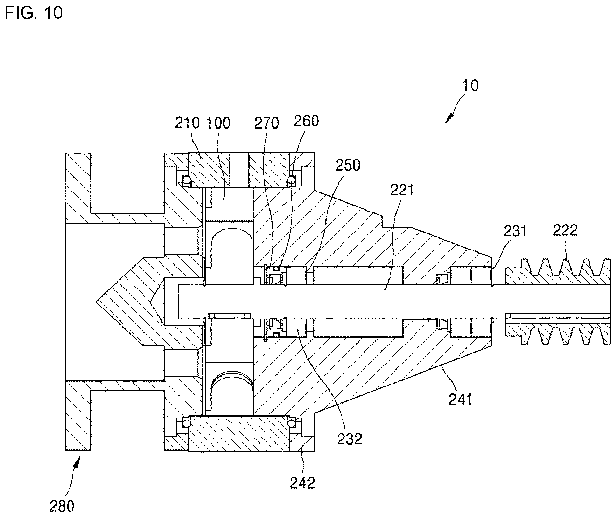

The body 110 may be formed in a cylindrical shape and have an axial hole h. A rotating shaft 221 (in FIG. 10) may be inserted into the axial hole h.

In addition, the body 110 may include an inner body 111 and an outer body 112.

The body inside 111 may be formed in a cylindrical shape and have an axial hole h.

The body outside 112 may be disposed to surround a periphery of the inner body 111 and have a cylindrical shape.

In addition, the inner body 111 and the outer body 112 may be integrally formed.

The blade unit 120 may be disposed to surround the periphery of the body 110 (specifically, the periphery of the outer body 112).

In addition, the blade unit 120 may include a base 121 and a plurality of unit blades 122.

The base 121 may be disposed to surround the periphery of the body 110 and have a cylindrical shape.

The unit blades 122 may be radially arranged in a line along the periphery of the base 121.

In addition, each of the unit blades 122 may include an outlet e that discharges an injected fluid F in a direction different from a fluid injection direction, but does not discharge the fluid to other unit blades 122. Specifically, each of the unit blades 122 may be configured to suppress the injected fluid F from being discharged to the other unit blades 122. More specifically, each of the unit blades 122 may be configured to discharge 90% by weight or more, 95% by weight or more, 97% by weight or more, 98% by weight or more, 99% by weight or more, or 100% by weight of the injected fluid to the outlet e.

Each of the unit blades 122 may include a groove portion g, a bottom portion 122a, a first blocking portion 122b, a second blocking portion 122c, and a third blocking portion 122d.

The groove portion g serves to temporarily accommodate the fluid F injected to each of the unit blades 122. Specifically, the groove portion g serves to accommodate the fluid F injected to each unit blade 122 for a predetermined retention time and then discharged the fluid to the outside through the outlet e.

The bottom portion 122a may form a bottom of the groove portion g. For example, the bottom portion 122a may have a flat structure.

In addition, the bottom portion 122a may have a part closed by an upper wall of the groove portion g (in other words, invisible because covered by the upper wall of the groove portion g when observed from the top downward), the remaining part may be opened (in other words, observable from the top downward).

The first blocking portion 122b may form a right wall of the groove portion g.

The second blocking portion 122c may form a left wall of the groove portion g.

In addition, the first blocking portion 122b may have a length shorter than the second blocking portion 122c. The outlet e may be formed by a difference in length between the first blocking portion 122b and the second blocking portion 122c.

The outlet e may be positioned adjacent to the first blocking portion 122b.

The third blocking portion 122d may be formed by a front wall 122d1 and an upper wall 122d2 of the groove portion g (see FIG. 3).

The fluid F may be injected toward the third blocking portion 122d (in particular, the front side wall 122d1). Specifically, as shown in FIG. 6, the fluid F may be injected toward the third blocking portion 122d, detained in the groove portion g for a predetermined time, and then discharged to the outside through the outlet e along the first blocking portion 122b.

In addition, the groove portion g may have an arch-shaped flat section (see g' in FIG. 6).

As described in the above manner, the groove portion g has the left wall 122b, the right wall 122c, the front wall 122d1, the upper wall 122d2 and the arch-shaped flat section, and the outlet e is formed, so that the fluid F injected to each of the unit blades 122 may have a flow pathway indicated in the direction of the arrow as shown in FIG. 6. Thus, the fluid F injected to a specific blade 122 may be suppressed from being discharged to other adjacent blades 122, and may be mostly discharged to the outlet e, and accordingly, the impulse turbine 100 can obtain a high rotational speed even by a low fluid injection pressure.

In addition, the base 121 and the unit blades 122 may be integrally formed.

The impulse turbine 100 having the same configuration as above may obtain a rotation speed of 3,600 rpm with a fluid injection pressure of 5 kPa (kilopascals) or less or 4 kPa or less. On the contrary, the conventional impulse turbine (not shown) has a problem that the efficiency is significantly low because a high fluid injection pressure of 12.7 kPa is required to obtain the rotation speed of 3,600 rpm.

Another aspect of the present invention provides a turbine device 10 including the above-described impulse turbine 100.

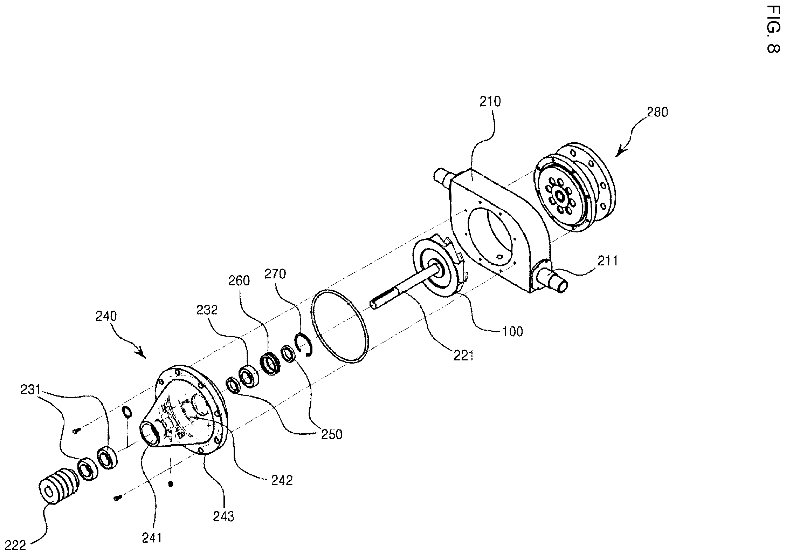

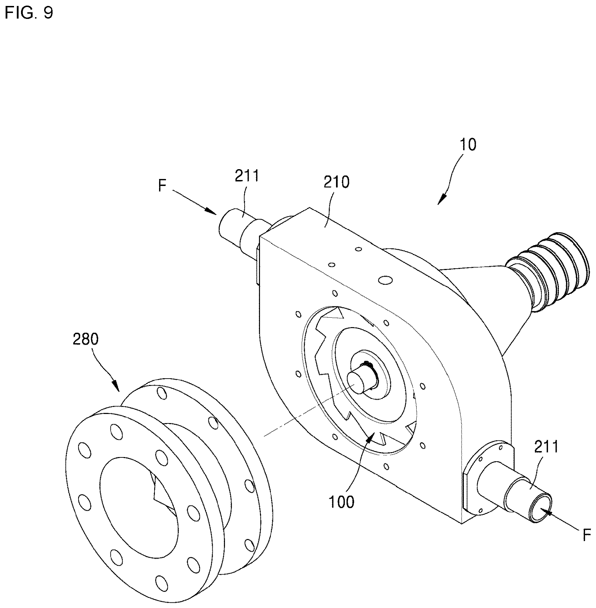

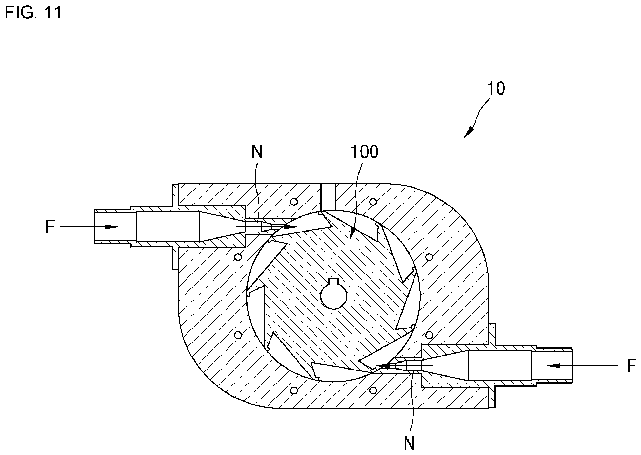

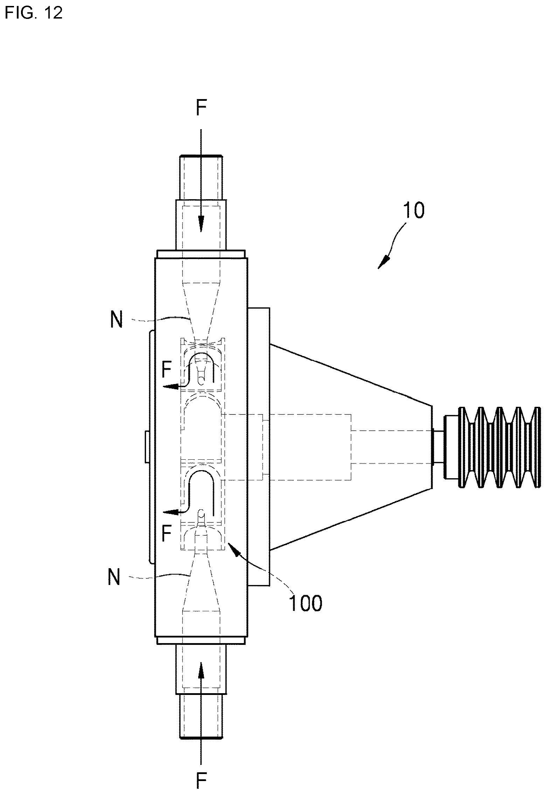

FIG. 8 is an exploded perspective view showing a rotating shaft support structure of the turbine device 10 in the self-operated incinerator system 1 of FIG. 1. FIG. 9 is a partially exploded perspective view of the turbine device 10 in the self-operated incinerator system 1 of FIG. 1. FIG. 10 is a sectional view of the turbine device 10 of FIG. 9. FIG. 11 is a view showing an operating state of the turbine device 10 of FIG. 9. FIG. 12 is a perspective projection view showing introduced and discharged pathways of the fluid F during operating the turbine device 10 of FIG. 9.

Referring to FIGS. 8 to 12, the turbine device 10 in the self-operated incinerator system 1 of FIG. 1 includes a housing 210, a rotating shaft 221 and an impulse turbine 100.

The turbine device 10 may be configured such that a high-pressure fluid F injected from a nozzle N hits the blade unit 120 of the impulse turbine 100 and stays in the blade unit 120 for a predetermined period of time rather than escaping immediately from the blade unit 120 as in the conventional turbine, and thus an inertial force of the high-pressure fluid F may act on the blade unit 120 for a considerable period of time. Accordingly, the pressure of the fluid F may be continuously applied to the blade unit 120, so that the power of the turbine device 10 is further maximized.

A rotating shaft support structure of the turbine device 10 may include a housing 210, an impulse turbine 100, a shaft support 240 and a fluid discharge pipe 280.

The housing 210 may have a space for allowing the impulse turbine 100 to be rotated therein and include a pair of fluid inlet 211 and fluid outlet provided on one side and the other side. The fluid outlet may communicate with the fluid discharge pipe 280.

The impulse turbine 100 may be configured to be rotated after being coupled to the rotating shaft 221 axially installed in and rotated about a center of the turbine device 10.

In addition, the housing 210 may be configured to have opened both sides, in which one side may be coupled to the shaft support 241 for supporting one end of the rotating shaft 221, and the other side may be coupled to the fluid discharge pipe 280 having a fluid discharge hole.

The shaft support 241 may be formed in a center thereof with a through-hole through which the rotating shaft 221 passes, and may include a flange portion 242 coupled to the one side of housing 210.

The flange portion 242 is coupled to the one side of the housing 210 via a fastener such as a bolt or screw, At this point, an O-ring may be fitted and coupled to prevent the pressure inside the housing 210 from leaking so as to increase the sealing force.

In addition, a bearing installation groove 241 is formed in a front of the shaft support 241, and a bearing accommodation space 242 is formed in a rear thereof, in which a front bearing 231 for supporting a front of the rotating shaft 221 may be fitted and coupled to the bearing installation groove 241, and a rear bearing 232 for supporting a rear of the rotating shaft 221 may be fitted and coupled to the bearing accommodation space 242, thereby supporting the rotating shaft 221 eccentrically from the housing 210.

In other words, the impulse turbine 100 may be configured to be rotated inside the housing 210 while the rotating shaft 221 is supported only by the shaft support 241.

In addition, a blocking member 260 may be formed in the bearing accommodation space 242, so that a fluid (such as steam) introduced to the bearing 232 may be blocked.

The blocking member 260 may be configured not to be separated from the bearing accommodation space 242 by an elastic fixture 270. Oil seals 250 may be provided on both sides of the bearing 232 and oil may be supplied to the bearing 232, so that the rotating shaft 221 can be rotated more smoothly.

Thus, all bearings 232 of the turbine device 10 may be prevented from being affected from a hot fluid (steam), and accordingly, any bearing may be prevented from being damaged. In addition, the evaporation of oil (grease) may be minimized, so that the durability of the rotating shaft 221 and the bearing 232 may be improved.

A generator coupling portion 222 may be formed at an end of the rotating shaft 221. The generator coupling portion 222, for example, may be a pulley.

Hereinafter, an operating process of the self-operated incinerator system 1 according to one embodiment of the present invention having the configuration as described above will be described.

### (Operation before normal operating and after starting)

Referring to FIG. 1, since the incinerator 2 operates at a temperature of about 800°C and the amount of heat is insufficiently supplied to the steam boiler 3, the steam pressure that satisfies a standard value fails to be normally supplied. Accordingly, since the turbine rotational force is insufficient, the generator 4 is in a state of failing to generate the rated power. Accordingly, the static switch 11 is selectively electrically connected to the storage battery 6 (specifically, the first inverter 8) rather than to the generator 4 (specifically, the second inverter 9), and thus, the overall operation of the self-operated incinerator system 1 is a state in which the power charged in the storage battery 6 is used.

### (Operation after normal operating)

The incinerator 2 operates at a temperature of about 1,500°C, and combustion gas discharged to a chimney of the incinerator 2 has a sufficient amount of heat. Accordingly, the energy supplied to the steam boiler 3 is also sufficient, so that the steam S is sufficiently supplied at a required pressure. Accordingly, the turbine rotational force is sufficient to allow the generator 4 to generate the rated power, and the control unit 12 having sensed the frequency or power of the generator 4 switches an electrical connection portion of the static switch 11 from the storage battery 6 (specifically, the first inverter 8) into the generator 4 (specifically, the second inverter 9), so that the generated power P of the generator 4 is directly supplied to various using sites 2, 3 and/or 15.

The present invention has been described with reference to the drawings, which are merely exemplary, and it will be understood by those skilled in the art that various deformations, modifications and other equivalent embodiments may be applicable based on the above-described embodiments. Therefore, the actual scope of the present invention will be defined by the technical spirit of the appended claims.

## Claims

1. A self-operated incinerator system comprising:
an incinerator;
a steam boiler configured to receive waste heat from the incinerator so as to produce steam;
a turbine device configured to receive the steam produced from the steam boiler to generate a turbine rotational force;
a generator configured to generate power by using the turbine rotational force generated by the turbine device; and a storage battery configured to store the power generated by the generator and use the power for starting or normally operating at least one from the incinerator and the steam boiler.

2. The self-operated incinerator system of claim 1, wherein both of starting and normally operating are performed without an external power supply.

3. The self-operated incinerator system of claim 2, wherein each of the incinerator and the steam boiler is configured to start only with a power supplied from the storage battery without the external power supply, and normally operate only with a power supplied from at least one of the generator and the storage battery without the external power supply.

4. The self-operated incinerator system of claim 2, wherein the storage battery is configured to be charged only with the power supplied from the generator without the external power supply except for an initial charging before installation.

5. The self-operated incinerator system of claim 2, further comprising:
a solar battery configured to produce power and supply the power to the storage battery, wherein
the storage battery is configured to be charged only with the power supplied from at least one of the generator and the solar battery without the external power supply except for an initial charging before installation.

6. The self-operated incinerator system of claim 2, wherein the operation stops when the operation is unnecessary and restarts without the external power supply when the operation is necessary.

7. The self-operated incinerator system of claim 2, further comprising:
a rectifier electrically connected to the generator and the storage battery;
a first inverter electrically connected to the storage battery;
a second inverter electrically connected to the rectifier;
a static switch selectively electrically connected to the first inverter or the second inverter; and
a distribution board electrically connected to the static switch.

8. The self-operated incinerator system of claim 7, further comprising:
a control unit configured to control an operation of the static switch by sensing a frequency or power of the generator.

9. The self-operated incinerator system of claim 2, wherein the turbine device includes an impulse turbine.
